## Europäisches Patentamt

## European Patent Office

## Office européen des brevets

(19)

(11) Veröffentlichungsnummer: **0 213 321**
**B1**

(12)

# EUROPÄISCHE PATENTSCHRIFT

(45) Veröffentlichungstag der Patentschrift:
**13.09.89**

(51) Int. Cl.⁴: **E21B 43/22**

(21) Anmeldenummer: **86109080.1**

(22) Anmeldetag: **03.07.86**

(54) **Verfahren zur Injektivitätserhöhung von Einpressbohrungen bei der Ölförderung mittels Wasserfluten.**

(30) Priorität: **31.08.85 DE 3531214**

(43) Veröffentlichungstag der Anmeldung:
**11.03.87 Patentblatt 87/11**

(45) Bekanntmachung des Hinweises auf die Patenterteilung:
**13.09.89 Patentblatt 89/37**

(84) Benannte Vertragsstaaten:
**AT DE FR GB IT NL**

(56) Entgegenhaltungen:
**EP-A- 0 058 871**
**EP-A- 0 088 206**
**EP-A- 0 117 970**
**US-A- 4 457 373**
**US-A- 4 478 281**

(73) Patentinhaber: **HÜLS AKTIENGESELLSCHAFT, - RSP Patente / PB 15 - Postfach 13 20, D-4370 Marl 1(DE)**

(72) Erfinder: **Balzer, Dieter, Dr., Talstrasse 21, D-4358 Haltern(DE)**

## Beschreibung

Bei der Förderung von Öl aus ölführenden Lagerstätten gelingt es im allgemeinen nur, einen Bruchteil des ursprünglich vorhandenen Öls durch primäre Förderverfahren zu gewinnen. Hierhei gelangt das Öl infolge des natürlichen Lagerstättendrucks an die Erdoberfläche bzw. wird bei nachlassender Energie von der Bohrsohle zur Erdoberfläche hochgepumpt.

Eine weitere Steigerung der Ölausbeutung wird durch sekundäre Maßnahmen bewirkt. Hierbei wird Wasser oder Gas durch Injektionssonden eingepreßt. Das am häufigsten angewendete Verfahren ist das sogenannte Wasserfluten, bei dem entweder in geschlossenem Kreislauf produziertes Formationswasser reinjiziert oder geeignetes Flutwasser injiziert wird. Im letzteren Fall ist auf die Verträglichkeit der Ionen des eingepreßten Wassers mit denen des Formationswassers zu achten. Das Wasserfluten dient sowohl der Zuführung von Lagerstättenenergie als auch der gezielten Verdrängung des Öls zu den Prodiktionssonden hin. Um hierbei einen möglichst großen Teil des Porenraumes zu erfassen (man definiert demgemäß einen volumetrischen Durchlaufwirkungsgrad), sind entsprechend zweckmäßige Anordnungen von Einpreß- und Produktionssonden zu wählen; gleichzeitig müssen sehr hohe Wassereinpreßraten angewendet werden. In vielen Fällen ist man bestrebt, das Wasser in den Aquifer zu injizieren, in manchen Fällen jedoch wird auch die Ölzone hierbei in großem Umfang kontaktiert. Bei der häufig angewendeten geschlossenen Fahrweise des Wasserflutens wird ohnehin ein Wasser injiziert, das gewöhnlich noch restliches Öl enthält, da in den Abscheidern eine quantitative Trennung von Öl und Wasser nur selten gelingt.

Immer jedoch, wenn nicht miteinander mischbare Flüssigkeiten im Porenraum coexistieren, treten Kapillardrücke auf, die umso höher sind, je größer die Grenzflächenspannungen zwischen den beiden Flüssigkeiten und je kleiner die Porendurchmesser im Porenraum sind. Bei der Injektion von Wasser, d. h. beim Wasserfluten, müssen diese Kapillardrücke durch den Injektionsdruck überwunden werden. Nun zeigen Modellrechnungen (vgl. D. Balzer, Oil Gas 1 (1983)), daß die zu überwindenden Kapillardrücke extrem hoch liegen, und folglich viele der engeren Poren nicht geflutet werden können. Dieser Befund ist besonders schwerwiegend in unmittelbarer Nähe der Injektionssonden, wo große Mengen Wasser in kurzer Zeit durch eine relative kleine Trägerfläche hindurchtreten müssen.

Eine Lösung dieses Problems, nämlich die Erhöhung der relativen Wasserpermeabilität in den Injektionssondenbereichen, muß dadurch gelingen, daß man die Restölsättigung in diesen Bereichen stark reduziert. Die Tiefe dieser Bereiche muß nicht sehr groß sein, ca. 3 bis 20 m werden in den meisten Fällen genügen.

Diese Reduzierung der Restölsättigung in den Injektionssondenbereichen sollte entsprechend dem heutigen Wissensstand zur Tertiären Erdölgewinnung unter Verwendung von Tensiden über den Weg der Mikroemulsion gelingen. Defakto werden auch in den US-A 3 474 865, 3467 188 und 3 718 187 Einpreßsondenbehandlungsverfahren beschrieben, bei denen Mikroemulsionen oder micellare Dispersionen, also Systeme bestehend aus Öl, wäßriger Lösung, Tensid, Cotensid und Elektrolyten eingesetzt werden. Diese Problemlösung hat allerdings den Nachteil, daß die Tensidmengen zur Herstellung von Mikroemulsionen gewöhnlich relativ hoch liegen. Außerdem hängt das Phasenverhalten von Mikroemulsionen in vielen Fällen von der Tensidkonzentration ab, die bei zunehmendem Vordringen der Tensidlösung in die Lagerstätte aufgrund von Adsorptionsvorgängen abnimmt. Dementsprechend ändert sich das Phasenverhalten von III nach II+ (vgl. G. J. Hirasaki et al., SPE 8825 (1980)), was meist zu einer starken Viskositätserhöhung der Dispersion führt, wobei die Injektivität erniedrigt statt erhöht wird.

Überraschenderweise wurde das Problem gelöst durch ein Verfahren zur Injektivitätserhöhung von Einpreßbohrungen bei der Ölförderung mittels Wasserfluten durch Einpressen einer Lösung, Dispersion oder wasserexternen Emulsion von Tensid in Formations- oder Flutwasser und ggf. Rohöl in die Injektionsbohrung, das dadurch gekennzeichnet ist, daß als Tensid ein carboxymethyliertes Oxethylat der Formel

R - O (C$_3$H$_6$O)$_m$(C$_2$H$_4$O)$_n$CH$_2$COOM,

in der R einen linearen oder verzweigten aliphatischen Rest mit 6 bis 20 Kohlenstoffatomen, einen monoalkylaromatischen Rest mit 3 bis 18 Kohlenstoffatomen in der Alkylgruppe oder einen di- bzw. oligoaromatischen Rest mit 1 bis 16 Kohlenstoffatomen pro Alkylgruppe bedeutet, wobei die Gesamtzahl der Kohlenstoffatome in den Alkylgruppen 7 bis 40 pro Molekül beträgt, m 0 bis 20, n 2 bis 100, M ein Alkali- oder Erdalkalimetallion oder Ammonium bedeuten und der Carboxymethylierungsgrad 10 bis 100 % beträgt, verwendet wird, das so ausgewählt ist, daß die Phaseninversionstemperatur des Systems Lagerstättenöl/Formationswasser oder Flutwasser/Tensid/ggf. Zusätze wenigstens 12 °C oberhalb der Lagerstättentemperatur liegt.

Die zu injizierende Tensidflüssigkeit bestizt zweckmäßigerweise eine Konzentration von 0,05 bis 7,0 Gew-% Tensid bezogen auf wäßrige Phase. Die Slug-Größe der zu injizierenden Tensidflüssigkeit sollte zwichen 0,005 und 0,2 Porenvolumen der Lagerstätte liegen.

Nach der Injektion des Tensidslugs wird zweckmäßigerweise Formations- bzw. Flutwasser in die Lagerstätte eingepreßt.

Als Zusätze können andere anionische Tenside und/oder ein- bzw. mehrwertige Alkohole oder Alkylether von mehrwertigen Alkoholen verwendet werden.

Zweckmäßigerweise beträgt das Massenverhältnis Zusätze : carboxymethylierten Oxethylat 4 : 1 bis 1 : 20.

Im Falle des Einpressens einer Emulsion sollte das Wasser-Öl-Verhaltnis 20 : 1 bis l : 2 betragen. Als Öl sollten Lagerstättenöl bzw. deren Gemische oder Rohölfraktionen eingesetzt werden.

Die Phasen-Inversions-Temperatur des Systems Lagerstättenöl/Formationswasser oder Flutwasser/Tensid/ggf.Zusätze liegt zweckmäßigerweise 12 bis 140, vorzugsweise 15 bis 120 °C und insbesondere 20 bis 120 °C oberhalb der Langerstättentemperatur.

Überraschend wurde bei der erfindungsgemäßen Arbeitsweise unter Bedingungen, die die Bildung einer Mikroemulsion ausschließen, und die eine Öl-in-Wasser-Makroemmulsion annehmen lassen, eine starke Injektivitätserhöhung beobachtet. Die oben erwähnten Nachteile der Mikroemulsion, nämlich die relativ hohen Tensidkonzentrationen und damit hohe Kosten sowie besonders die sich ändernden Phasenverhältnisse, lassen sich durch das erfindunsgemäße Verfahren ausschließen.

Die carboxymethylierten Oxethylate sind Tenside, die mit Wässern selbst extrem hoher Gesamtsalinitäten und entsprechenden Erdalkaliionenkonzentrationen verträglich sind. Sie lassen sich, wie in den US-A 4 457 373 und 4 478 281 beschrieben, zum Tensidfluten bzw. Micellar-Polymer-Fluten für eine gegebene Lagerstätte Maßschneidern. Kriterium für diese Anpassung des carboxymethylierten Oxethylates an das gegebene Reservoirsystem ist die sogenannte Phasen-Inversions-Temperatur (PIT). Dies ist der Temperaturebereich, bei dem eine wasserexterne Emulsion, bestehend aus Lagerstättenöl, Lagerstättenwasser und Tensid, in eine ölexterne Emulsion umschlägt. Parallele Phasenuntersuchungen zeigen an, daß bei der PIT eine mittelphasige Mikroemulsion gebildet wird. Liegt die PIT des Systems Rohöl/Formationswasser/Tensid/ggf. Zusätze bei Lagerstättentemperatur oder bis zu 10 °C darüber, so ist - wie Verdrängungsversuche am Beispiel unterschiedlicher Lagerrstättenöle und -wässer gezeigt haben - eine optimale Wirkung des Tensids hinsichtlich Ölmobilisierung und Ölbankbildung zu erwarten.

Ganz überraschend ist hier die Beobachtung, daß eine hervorragende Injektivitätserhöhrung durch carboxymethylierte Oxethylate nicht in dem Bereich optimaler Ölmobilisierung und Ölbankbildung eintritt, sondern bei wesentlich hydrophileren Tensideinstellungen, d.h. bei Temperaturdifferenzen PIT minus Lagerstättentemperatur deutlich oberhalb 10 °C.

Das erfindungsgemäße Verfahren besteht nun darin, daß ein bestimmtes Volumen einer Lösung, Dispersion oder Emulsion carboxymethylierter Oxethylate und ggf. Zusätze in Formationswasser oder - sofern letzteres nicht zur Verfügung steht - in Flutwasser in die Injektionssonden der Öllagerstätte entweder vor der Aufnahme des Wasserflutens oder zu irgendeinem Zeitpunkt während des Wasserflutens eingepreßt wird. Das carboxymethylierte Oxethylat wurde zuvor an die Lagerstätte dergestalt angepaßt, daß die PIT des Systems Lagerstättenöl/Formationswasser bzw. ggf. Flutwasser/Tensid/ggf. Zusätze mindestens 12 °C, vorzugsweise 15 °C, oberhalb der Lagerstättentemperatur liegt. Im Falle eines hohen Gas-Öl-Verhältnisses ist Lebend-Lagerstättenöl bei diesen Messungen zu verwenden.

Die erfindungsgemäß einzusetzenden carboxymethylierten Oxethylate genügen der Formel

$$R - O (C_3H_6O)_m (C_2H_4O)_n CH_2COOM,$$

in der R einen linearen oder verzweigten, gesättigten oder ungesättigten Alkylrest mit 6 bis 20, vorzugsweise 8 bis 16, Kohlenstoffatomen, einen monoalkylaromatischen Rest mit 3 bis 18, vorzugsweise 4 bis 16, Kohlenstoffatomen in der Alkylgruppe oder einen di- bzw. oligoalkylaromatischen Rest mit 1 bis 18 Kohlenstoffatomen pro Alkylgruppe darstellen, wobei die Gesamtzahl der Kohlenstoffatome in den Alkylgruppen 7 bis 40 beträgt, m 0 bis 20, vorzugsweise 0 bis 10, n 2 bis 100, vorzugsweise 3 bis 50, M ein Alkali - oder Erdalkaliion oder Ammonium bedeuten.

Die carboxymethylierten Oxethylate lassen sich z. B. nach der DE-A 24 18 444 durch Umsetzung von Oxethylaten der Formel $R-O(C_2H_4O)_nH$ oder $R-O(C_2H_3(CH_3)O)_m (C_2H_4O)_nH$ mit einem Salz der Chloressigsäure in Gegenwart von Alkalihydroxid oder anderen Basen herstellen. Aber auch andere Herstellungsverfahren sind geeignet.

Als Alkohole, deren Oxethylate den Carboxymethylaten zugrunde liegen, lassen sich z. B. einsetzen: Hexylalkohol, Octylalkohol, Nonylalkohol, Decylalkohol, Undecylalkohol, Lauryl-, Tridecyl-, Myristyl-, Palmityl- und Stearylalkohol, aber auch ungesättigte Alkohole, wie z. B. Oleylalkohol. Die Alkylkette kann dabei normal-oder verzweigtkettig sein. Als Alkylphenole lassen sich z. B. heranziehen: Propylphenol, Butylphenol, Pentylphenol, Hexylphenol, Octylphenyol, Nonylphenol, Decylphenol, Undecylphenol, Dodecylphenol, Tridecylphenol, Cetylphenol sowie die entsprechenden Dialkylphenole, wie z. B. 2-Methyl-4-Tridecylphenol, 2-Dodecyl-4-Ethylphenol, Dinonylphenol, etc. Die Alkylkette kann normal oder verzweigt sein. Es lassen sich auch Trialkylphenole einsetzen wie Tri-n-butylphenol, Tri-t-butylphenol, Dimethylnonylphenol oder Tetraalkylphenole wie Tetrabutylphenol. Die Oxethylierung kann in Gegenwart katalytischer Mengen Alkalihydroxid mit 0 bis 20, vorzugsweise 0 bis 10, insbesondere 1 bis 20 mol Propylenoxid/mol Hydroxylverbindung und danach mit 2 bis 100, vorzugsweise 3 bis 50, insbesondere 4 bis 30 mol Ethylenoxid/mol Hydroxylverbindung durchgeführt werden. Die so entstehenden Oxethylate sind Homologengemische. Die sich anschließende Carboxymethylierung kann bei entsprechender Verfahrensweise vollständig sein, so daß die carboxymethylierten Oxethylate reine anionische Tenside sind. Alternativ bei nicht vollständiger Carboxymethylierung enthalten die Produkte noch mehr oder minder große Mengen nicht umgesetztes Oxethylat. Mit der Formel $R-O(C_3H_6O)_m/C_2H_4O)_nCH_2COOM$ ist daher häufig ein Gemisch mit unterschiedlichen Mengen an nicht umgesetztem Oxethylat gemeint. Demgemäß läßt sich ein Carboxymethylierungsgrad definieren. Es hat sich gezeigt, daß Mischungen mit einem Carboxymethylierungsgrad zwischen 1O und 1OO %, vorzugsweise zwischen 5O und 1OO % und ganz besonders zwischen 7O und 1OO %, sehr wirksam sind.

Aus Gründen höherer Effektivität kann es zweckmäßig sein, der Lösung, Dispersion oder Emulsion carboxymethylierter Oxethylate andere anionische Tenside zuzufügen. Besonders infrage kommen hier marktgängige Monoalkylbenzolsulfonate mit 6 bis 18, vorzugsweise 8 bis 14, Kohlenstoffatomen in der, ggf. verzweigten, Alkylkette oder Di- bzw. Trialkylbenzolsulfonate mit 1 bis 16 Kohlenstoffatomen pro ggf. verzweigter Alkylette, wobei die Gesamtzahl der Kohlenstoffatome in den Alkylkette pro Molekül 8 bis 25, vorzugsweise 1O bis 2O beträgt. Ebenfalls in Betracht kommen Alkansulfonate mit 8 bis 22, vorzugsweise mit 1O bis 18, Kohlenstoffatomen, ferner Alkylsulfate mit 8 bis 2O Kohlenstoffatomen, Alkanolethersulfate im gleichen Kohlenstoffatombereich in der Alkylgruppe sowie einem Ethoxylierungsgrad von 1 bis 1O mol Ethylenoxid/mol und Alkylarylethersulfate mit 6 bis 14 Kohlenstoffatomen in der Alkylkette sowie einem Oxethylierungsgrad von 1 bis 1O mol Ethylenoxid/mol.

Das Massenverhältnis von carboxymethylierten Oxethylaten zu zugesetztem anionischem Tensid kann zwischen 1 : 4 bis 2O : 1, vorzugsweise 1 : 2 bis 1O : 1 liegen.

Zweckmäßig kann es ferner sein, dem Tensid Cosolventen im Form einwertiger oder mehrwertiger Alkohole oder Alkylether von mehrwertigen Alkoholen zuzusetzen, wobei das Massenverhaltnis carboxymethylierte Oxethylate/Cosolvent 1 : 4 bis 2O : 1, vorzugsweise 1 : 4 bis 1O : 1 beträgt. Geeignete Cosolventen bzw. Cotenside sind einwertige Alkohole mit 3 bis 8 Kohlenstoffatomen, wie z. B. Propanolisomere, Butanolisomere, Pentanolisomere, etc., oder mehrwertige Alkohole mit 3 bis 8 C-Atomen, wie Propandiol, Butandiol, Pentandiol, etc., oder Alkylether mehrwertiger Alkohole, wie Ethylenglykolmonoethylether, Ethylenglykolmonoisopropylether, Ethylenglykolmonobutylether, Diethylenglykolmonobutylether, etc.

Schließlich kann es aus Gründen geringer Tensidadsorption bzw. -retention zweckmäßig sein, die wirksame Tensidflüssigkeit in Form einer Emulsion einzupressen. Da die PIT des Systems Lagerstätten-Öl, Formationswasser bzw. Flutwasser, Tensid, ggf.Zusätze erfindungsgemäß mindestens um 12 °C höher liegen, soll als die Lagerstättentemperatur und letztere fast immer oberhalb 2O °C und meist sogar oberhalb 3O °C liegt, sollte die Emulsion wasserextern sein. Als Öl kann das betreffende Lagerstättenöl oder das Öl einer anderen Lagerstätte, oder Rohölgemische oder Rohölfraktionen verwendet werden. Wird ein anderes als das Lagerstättenöl verwendet, so sollte darauf geachtet werden, daß die PIT der einzupressenden Emulsion mit der des Lagerstättensystems in etwa übereinstimmt. Das Wasser-Öl-Verhältnis kann 2O : 1 bis 1 : 2 betragen.

Die in die Injektionssonden einzupressenden Wirkstoffmengen, d.h. Volumen und Konzentration der carboxymethylierten Oxethylate und ggf. der Zusätze, werden vor allem von der Mächtigkeit und dem Porenvolumen des Ölträgers bestimmt. Weiterhin sind die Areale in ummittelbarer Nähe der Injektionssonden, die von dem Restöl befreit werden sollen, entscheidend. Im allgemeinen wird es ausreichen, die Injektionsbereiche bis zu einer Entfernung von etwa 3 bis 2O m von den Injektionssonden zu behandeln. Höhere Wirkstoffmengen können nützlich sein, jedoch bedeutet ihr Einsatz auch höhere Kosten. Demgemäß sollten zwischen O,OO5 und O,2 PV Wirkstofflösung injiziert werden. Die Tensidkonzentration sollte zwischen O,O5 und 7 % liegen. Injektivitätstests an Modellformationen haben gezeigt, daß bei gleicher Menge höhere Volumina und niedrigere Konzentrationen zu günstigeren Ergebnissen führen als im umgekehrten Fall.

Nach der labormäßigen Anpassung des Tensidsystems an die jeweiligen Lagerstättenbedingungen mittels PIT-Messung und der lagerstättenmäßigen Überlegungen hinsichtlich Menge, Konzentration und Volumen des Tensidsystems wird die Wirkstofflösung mittels Pumpen in die Injektionszonen eingepreßt. Sodann wird das Wasserflutverfahren aufgenommen bzw. fortgesetzt.

Die nachfolgenden Beispiele sollen das erfindungsgemäße Verfahren erläutern. Sie bestehen in Injektionsversuchen entweder an Sandschüttungen oder an Sandsteinbohrkernen als labormäßige Modellformationen für die Injektionszone des Öltragers. Im Falle von Sandschüttungen wurde teilweise 5 % Kaolin (Bolus Alba, spez. Oberfläche 14,5 m²/g) zugesetzt, um den Einfluß einer tonhaltigen Formation auf den Prozeß zu studieren.

Zur Herstellung einer Sandschüttung wurde ein thermostatisierbares Stahlrohr von 7O cm Länge und 5 cm Durchmesser, versehen mit Temperaturmeßeinrichtung und Manometer, beidseitig verschließbar durch Gewindeverschlüsse mit Kapillareingang und Druckhalteventilausgang, mit kantengerundetem Quarzsand beschickt. Sodann wurde mittels einer Membranpumpe die Sandschüttung mit Salzwasser benetzt und durch einen Thermostaten auf die gewünschte Temperatur gebracht. Mit Hilfe von Drucktransmittern wurde die Permeabilität der Schüttung bestimmt. Sodann erfolgte Sättigung mit einem Modellöll (n-Dekan oder Rohöl), wobei sich gleichzeitig der Haftwassergehalt bestimmen ließ.

Anschließend wurde mit einer Geschwindigkeit von ca. 5 m/d Salzwasser injiziert, bis sich ein über längere Zeit (ca. O,5 PV) konstanter Verwässerungsgrad von 98 bis 1OO % sowie ein konstanter Druckgradient einstellten. Entsprechend der Flutgeschwindigkeit $Q_l$ wurde hierbei ein Druckgradient Delta$p_l$ registriert. Nach diesem Wasserfluten wurde die Wirkstofflösung oder -dispersion injiziert. Ihre Konzentration betrug O,4 bis O,5 %, ihr Volumen 2 bis 3 PV entsprechend dem Konzept, daß die Modellformation nicht den Porenraum zwischen Injektions- und Produktionssonde, sondern nur den vorderen Teil der Injektionszone darstellen soll. In vielen Fällen wurde bereits nach kurzer Injektionszeit eine starke Absenkung des Druckgradienten bei konstater Injektionsrate beobachtet, bzw. letztere konnte stark erhöht werden, ohne daß der Druckgradient zunahm. Anschließend wurde weiteres Salzwasser injiziert. Unter stationaren Bedingungen wird nun bei einer Flutgeschwindigkeit $Q_2$ der Druckgradient Delta$p_2$ registriert. Ein Maß für die Injektivitätserhöhung ist die Größe f, die sich wie folgt

$$f = \frac{Q_2}{Delta p_2} \cdot \frac{Delta p_1}{Q_1}$$

aus den meßdaten bestimmen läßt. Gilt f größer 1, so liegt eine Injektivitätserhöhung vor. Gilt f kleiner 1, so wird die Injektivität verschlechtert.

Zur Herstellung von Modellformationen aus konsolidiertem Gestein wurden zylindrische Bohrkerne von 50 cm Länge und 8 cm Durchmesser aus Bentheimer Sandstein in Epoxidharz eingebettet. Die Porenvolumina betrugen ca. 600 ml. Die Temperierung bei den in Harz eingebetteten Kernen erfolgte mittels eines offenen Temperaturbades. Ansonsten bestanden keine Unterschiede bei dem Betrieb dieser Modellformationen im Vergleich zu dem an Sandschüttungen.

<u>Beispiele 1 bis 15</u>

In der folgenden Tabelle sind 12 erfindungsgemäße Beispiele und 2 Vergleichsbeispiele zusammengestellt. Es wurden folgenden Substanzen eingesetzt:

Öle: D n-Dekan, 96 %ig
M 40 ° API-Rohöl
(66 % paraffinische, 20 % naphthenische und 13 % aromatische Kohlenwasserstoffe)
Eta$_{20°C}$: 1,2 mPa.s
A 33° API-Rohöl
(70 % paraffinische, 11 % naphthenische und 18 % aromatische Kohlenwasserstoffe)
Eta$_{20°C}$ : 19 mPa.s
Salzwasser:
M Formationswasser
5,5 % $Na^+$, 1,2 % $Ca^{++}$, 0,23 % $Mg^{++}$, 0,05 % K, 11,3 % $Cl^-$
S synthet. Seewasser
(1,12 % $Na^+$, 0,035 % $K^+$, 0,047 % $Ca^{++}$, 0,133 % $Mg^{++}$, 2,02 % $Cl^-$, 0,27 % $SO_4^{2-}$)
L Formationswasser
(3,6 % $Na^+$, 0,15 % $K^+$, 0,26 % $Ca^{++}$, 0,11 % $Mg^{2+}$, 5,78 % $Cl^-$)
Tenside:

A carboxymethyliertes Nonylphenoloxethylat-Natriumsalz mit 5,9 mol EO/mol, Carboxymethylierungsgrad 100 %,
B carboxymethyliertes Nonylphenoloxethylat-Natriumsalz mit 5,5 mol EO/mol, Carboxymethylierungsgrad 98 %,
C carboxymethyliertes Nonylphenoloxethylat-Natriumsalz mit 6,3 mol EO/mol, Carboxymethylierungsgrad 100 %,
D carboxymethliertes Nonylphenoloxethylat-Natriumsalz mit 3,6 mol EO/mol, Carboxymethylierungsgrad 80 %,
Tertiärbutanol als Cotensid
Tensid/Cotensid-Verhältnis 1 : 4
E carboxymethyliertes Nonylphenoloxethylat-Natriumsalz mit 3,9 mol EO/mol, Carboxymethylierungsgrad 86 %,
F carboxymethyliertes Nonylphenoloxethylat-Natriumsalz mit 4,4 mol EO/mol, Carboxymethylierungsgrad 90 %,
G carboxymethyliertes Nonylphenolblockpropoxyoxethylat-Natriumsalz mit 8 mol PO/mol und 3,5 mol EO/mol, Carboxymethylierungsgrad 71%,
H carboxymethyliertes Nonylphenoloxethylat-Natriumsalz mit 3,9 mol EO/mol, Carboxymethylierungsgrad 90 %,
I carboxymethyliertes Alfol1218-oxethylat mit 3 mol EO/mol, Carboxymethylierungsgrad 90 %,
K carboxymethyliertes Nonylphenoloxethylat-Natriumsalz mit 4,7 mol EO/mol, Carboxymethylierungsgrad 95%,
L carboxymethyliertes Nonylphenoloxethylat-Natriumsalz mit 6 mol EO/mol, Carboxymethylierungsgrad 85 %.

Wie in erfindungsgemäßen Beispielen gezeigt, wird eine starke Erhöhung der Injektivität durch das in den Ansprüchen beschriebene Verfahren erzielt.

Tabelle

| Nr.*) | Formation/Permeab.(l) | Temp. °C | Formations-wasser | Öl | Tensid-system | PIT °C | Delta T***) | $Q_1$ m/d | $sp_1$ bar/m | $Q_2$ m/d | $Delta_{p2}$ bar/m | f |
|---|---|---|---|---|---|---|---|---|---|---|---|---|
| 1 | Kern/2,3 | 53 | M | M | A | 65 | 12 | 5,7 | 1,8 | 5,9 | 0,4 | 4,7 |
| 2 (V) | Kern/2,3 | 53 | M | M | B | 54 | 1 | 7,0 | 2,4 | 6,5 | 2,5 | 0,9 |
| 3 | Kern/1,4 | 53 | M | M | C | 75 | 22 | 5,0 | 2,5 | 5,1 | 0,6 | 4,3 |
| 4 (V) | Kern/2,5 | 60 | S | D | D | 69 | 9 | 4,9 | 1,0 | 6,4 | 2,2 | 0,6 |
| 5 | Kern/1,2 | 30 | S | D | D | 69 | 39 | 5,4 | 1,0 | 10,1 | 0,6 | 3,1 |
| 6 | Kern/1,2 | 60 | S | D | E | 87 | 27 | 13,4 | 2,4 | 23,1 | 1,8 | 2,3 |
| 7 | Kern/1,1 | 30 | S | D | F | 104 | 74 | 4,8 | 2,9 | 9,5 | 2,8 | 2,0 |
| 8 | Kern/2,0 | 40 | S | D | G | 57 | 17 | 5,9 | 2,4 | 10,0 | 0,6 | 6,8 |
| 9 | Sand/0,9 | 60 | S | A | E | 73 | 13 | 3,0 | 1,4 | 6,5 | 1,5 | 2,0 |
| 10 | Kern/2,1 | 60 | S | A | H | 98 | 38 | 3,3 | 0,3 | 5,2 | 0,2 | 2,4 |
| 11 | Kern/1,7 | 65 | S | A | I | 81 | 16 | 5,4 | 1,3 | 8,0 | 0,6 | 3,2 |
| 12 | Kern/1,6 | 40 | L | A | C | 60 | 20 | 6,8 | 4,8 | 6,7 | 0,9 | 5,3 |
| 13 | Sand**)/0,3 | 90 | S | A | L | >120 | >30 | 8,5 | 8,6 | 8,6 | 1,9 | 4,7 |
| 14 | Sand**)/0,4 | 50 | S | A | L | >120 | >70 | 9,9 | 16,4 | 9,7 | 5,0 | 3,3 |

*) (V) = Vergleichsbeispiele
**) Sand enthält 5% Kaolin
***) Delta T = Differenz zwischen PIT und Lagerstättentemperatur

## Patentansprüche

1. Verfahren zur Injektivitätserhöhung von Einpreßbohrungen bei der Ölförderung mittels Wasserfluten durch Einpressen einer Lösung, Dispersion oder Emulsion von Tensid in Formations- oder Flutwasser und ggf. Rohöl in die Injektionsbohrung, dadurch gekennzeichnet, daß als Tensid ein carboxymethyliertes Oxethylat der Formel
$R - O (C_3H_6O)_m(C_2H_4O)_nCH_2COOM$,
in der R einen linearen oder verzweigten aliphatischen Rest mit 6 bis 20 Kohlenstoffatomen, einen monoalkylaromatischen Rest mit 3 bis 18 Kohlenstoffatomen in der Alkylgruppe oder einen di- bzw. oligoalkylaromatischen Rest mit 1 bis 16 Kohlenstoffatomen pro Alkylgruppe bedeutet, wobei die Gesamtzahl der Kohlenstoffatome in den Alkylketten pro Kolekül 7 bis 40 beträgt, m 0 bis 20, n 2 bis 100, M ein Alkali- oder Erdalkalimetallion oder Ammonium bedeuten und der Carboxymethylierungsgrad 10 bis 100 % beträgt, verwendet wird, das so ausgewählt ist, daß die Phaseninversions-Temperatur des Systems Lagerstättenöl/Formationswasser oder Flutwasser/Tensid/ggf. Zusätze wenigstens 12 °C oberhalb der Lagerstattentemperatur liegt.

2. Verfahren nach Anspruch 1, dadurch gekennzeichnet, daß die zu injizierende Tensidflüssigkeit eine Konzentration von 0,05 bis 7 Gew.% Tesid besitzt.

3. Verfahren nach den Ansprüchen 1 und 2, dadurch gekennzeichnet, daß die Sluggröße der zu injizierenden Tensidflüssigkeit zwischen 0,005 bis 0,2 Porenvolumen der Lagerstätte liegt.

4. Verfahren nach den Ansprüchen 1 bis 3, dadurch gekennzeichnet, daß nach der Injektion des Tensidslugs Formations- oder Flutwasser in die Lagerstätte eingepreßt wird.

5. Verfahren nach den Ansprüchen 1 bis 4, dadurch gekennzeichnet, daß als Zusätze andere anionische Tenside und/oder ein- bzw. mehrwertige Alkohole bzw. Alkylether von mehrwertigen Alkoholen verwendet werden können.

6. Verfahren nach Anspruch 5, dadurch gekennzeichnet, daß das Massenverhältnis Zusätze carboxymethyliertes Oxethylat 4 : 1 bis 1 : 20 beträgt.

7. Verfahren nach Anspruch 1, dadurch gekennzeichnet, daß im Falle der Injektion einer Emulsion das Wasser-Öl-Verhältnis 20 : 1 bis 1 : 2 beträgt.

8. Verfahren nach einem der Ansprüche 1 bis 8, dadurch gekennzeichnet, daß die Phasen-Invernsions-Temperatur des Systems Lagerstättenöl/Formationswasser oder Flutwasser/Tensid/ ggf. Zusätze 15 bis 120 °C oberhalb der Lagerstättentemperatur liegt.

## Claims

1. A process for enhancing the injectivity of injection wells in crude oil production using water flooding by injection into the injection well of a solution, dispersion or emulsion of surfactant in formation water or flooding water and if desired crude oil, characterised in that a carboxymethylated oxyethylate of the formula

R – O (C₃H₆O)ₘ(C₂H₄O)ₙCH₂COOM,

is used as surfactant, in which R denotes a linear or branched aliphatic radical with 6 to 20 carbon atoms, a monoalkyl aromatic radical with 3 to 18 carbon atoms in the alkyl group or a di- or oligoalkylaromatic radical with 1 to 16 carbon atoms per alkyl group, the total number of carbon atoms in the alkyl chains being 7 to 40 per molecule, m denotes 0 to 20, n denotes 2 to 100, M denotes an alkali metal ion or an alkaline earth metal ion or ammonium and the degree of carboxymethylation is 10 to 100%, the said carboxymethylated oxyethylate being selected so that the phase inversion temperature of the reservoir oil/formation water system or the flooding water/surfactant/optional additives system is at least 12°C above the reservoir temperature.

2. A process according to claim 1, characterised in that the surfactant fluid to be injected has a surfactant concentration of 0.05 to 7% by weight.

3. A process according to claim 1 or 2, characterised in that the slug size of the surfactant fluid to be injected is between 0.005 and 0.2 times the pore volume of the reservoir.

4. A process according to any of claims 1 to 3, characterised in that after injection of the surfactant slug formation water or flooding water is injected into the reservoir.

5. A process according to any of claims 1 to 4, characterised in that other anionic surfactants and/or monohydric or polyhydric alcohols or alkyl ethers of polyhydric alcohols can be used as additives.

6. A process according to claim 5, characterised in that the ratio by weight of additives to carboxymethylated oxyethylate is 4:1 to 1:20.

7. A process according to claim 1, characterised in that in the case of injection of an emulsion the water/oil ratio is 20:1 to 1:2.

8. A process according to any of claims 1 to 8, characterised in that the phase inversion temperature of the reservoir oil/formation water system or of the flooding water/surfactant/optional additives system is 15 to 120°C above the reservoir temperature.

**Revendications**

1. Procédé pour accroître le pouvoir d'injection de forages à injection lors du déplacement du pétrole à l'aide d'un noyage l'eau, en injectant sous pression dans le forage à injection une solution, dispersion ou solution de tensio-actif dans l'eau de formation ou l'eau de noyage, et éventuellement du pétrole brut, caractérisé par le fait que l'on utilise, comme tensio-actif un oxéthylat carboxyméthylé de formule

R – O(C₃H₆O)ₘ(C₂H₄O)ₙCH₂COOM,

dans laquelle R représente un radical aliphatique linéaire ou ramifié comportant de 6 à 20 atomes de carbone, un radical mono-alkyl-aromatique comportant de 3 à 18 atomes de carbone dans le groupe alkyle, ou un radical di- ou oligoalkyl-aromatique comportant de 1 à 16 atomes de carbone par groupe alkyle, le nombre total des atomes de carbone dans les chaînes alkyle étant par molécule de 7 à 40, m a une valeur de zéro à 20, n une valeur de 2 à 100, M représente un ion de métal alcalin ou de métal alcalino-terreux ou d'ammonium et le degré de carboxyméthylation est de 10 à 100%, ledit tensio-acitf étant choisi de manière de la température d'inversion des phases du système pétrole de gisement/eau de formation ou eau d'inondage/tensio-actif/additifs éventuels se situe au moins 12°C au-dessus de la température du gisement.

2. Procédé selon la revendication 1, caractérisé par le fait que le liquide tensio-actif à injecter possède une concentration en tensio-actif de 0,05 à 7% en poids.

3. Procédé selon les revendications 1 et 2, caractérisé par le fait que l'importance de la masse de liquide tensio-actif à injecter se situe entre 0,005 à 0,2 volumes de pores du gisement.

4. Procédé selon les revendications 1 à 3, caractérisé par le fait qu'après l'injection de la masse de tensio-actif, on envoie sous pression dans le gisement de l'eau de formation ou de l'eau de noyage.

5. Procédé selon les revendications 1 à 4, caractérisé par le fait que l'on peut utiliser, en tant qu'additifs, d'autres tensio-actifs anioniques et/ou des mono- ou poly-alcools ou des éthers alkyliques de poly-alcools.

6. Procédé selon la revendication 5, caractérisé par le fait que le rapport de masse additifs/oxéthylat carboxyméthylé est de 4:1 à 1:20.

7. Procédé selon la revendication 1, caractérisé par le fait que dans le cas d'une injection d'une émulsion, le rapport eau/pétrole est de 20:1 à 1:2.

8. Procédé selon l'une des revendications 1 à 8, caractérisé par le fait que la température d'inversion de phases du système pétrole de gisement/eau de formation ou du système eau de noyage/tensio-actif/additifs éventuels se situe de 15 à 120°C au-dessus de la température du gisement.